# EUROPEAN PATENT SPECIFICATION

(11) **EP 2 893 260 B1**
(45) Date of publication and mention of the grant of the patent: **17.02.2021**
(21) Application number: 13830447.2
(22) Date of filing: 12.07.2013
(51) Int. Cl.: F24D 19/02, F24D 19/06, F24C 7/04, F24C 15/24, F24C 7/06, F24D 13/02

(54) **RADIANT HEATING ELEMENT AND PANEL**
STRAHLHEIZELEMENT UND PLATTE
ÉLÉMENT ET PANNEAU DE CHAUFFAGE PAR RAYONNEMENT

(30) Priority: 23.08.2012 NO 20120950
(43) Date of publication of application: 15.07.2015
(73) Proprietor: Wesseltoft, Per, 3060 Svelvik (NO)
(72) Inventor: Wesseltoft, Per, 3060 Svelvik (NO)
(74) Representative: Nikolov, Nikolay Dontchev
(86) International application number: PCT/NO2013/000032
(87) International publication number: WO 2014/031003

(56) References cited:
- EP-A1- 0 381 583
- WO-A1-96/21828
- FR-A- 1 340 968
- FR-A1- 2 896 943
- US-A- 3 140 387
- US-A- 3 961 157

## Description

This invention relates to a (radiant) heating element and a heater / panel heater with approx. 98% (from approx. 51% to approx. 99%, and particularly from approx. 80% to approx. 99%, and even more particularly from approx. 90% to approx. 99%) radiant heat / heat radiation from the first / primary or front side and approx. 2% (from approx. 49% to approx. 1%, and particularly from approx. 20% to approx. 1%, and more particularly from approx. 10% to approx. 1%) from the second(ary) or rear side, without use of thermal insulation materials, so the (radiant) heating element or heater / panel heater may, for example, be designed to emit directional radiant heat and/or be used as a localised space heater.

For economical comfort heating, it is important to heat the desired area and avoid heat loss or undesired / inadvertent heating of other areas. The best method is to employ directional radiant heat / directional heat radiation aimed directly at the object that is to be warmed.

This can be best achieved by employing a heater with a radiating surface in direct contact with a heating element or which, to a great amount, constitutes the heating element, and that the front side has a surface (material) with a high emission coefficient (approx. 0.8) that emits considerable heat, and that the rear side has a surface (material) with a low emission coefficient (approx. 0.05) that emits little heat. Measurements show that such a heating element emits 95% from the side with the high emission coefficient and approx. 5% from the side with the low emission coefficient.

To prevent direct contact with the heating or radiating surface, a protective grid is mounted on the front side of the panel, with approx. 68% (e.g. from 50% to 95%) opening perpendicularly to the heating or radiating surface, so that heat emission / radiation from the heating or radiating surface is hindered as little as possible. The protective grid may be epoxy coated. A steel plate, perforated wholly / entirely or in a specific surface area thereof, making it approx. 68% open (e.g. from 50% to 95%), may be used.

The rear side is covered with a polished metal plate with a small heat transfer or emission coefficient (approx. 0.05), e.g. stainless steel, which, in addition to preventing the heating or radiation surface from being touched, also reflects the radiant heat or heat radiation from the heating or radiating surface, thus achieving approx. 98% radiation or radiance from the front side and approx. 2% radiation or radiance from the rear side of the panel.

A cover plate of polished stainless steel will reflect the radiant heat from the rear side of the heating or radiating surface and will absorb little heat, so that it will attain a contact temperature of approx. just 60°C. The front grid, which can be epoxy coated, both absorbs and emits radiant heat and has a contact temperature of approx. 80°C. This satisfies the "CE norm(s)" allowing a contact temperature on a front grid of up to 150°C, while the contact temperature at other parts of the heater is 80°C. It is also necessary that the contact temperatures are low enough so as not to harm users and are acceptable to those who can come into close proximity with the heater.

Radiant heat rays are like light and change with the square of the distance between the radiant / radiating surface and the irradiated surface. Heat rays are spread sideways according to the cosine law which states that the intensity of the heat rays is in relation to cosine / cos. of the angle that the rays have with radiant surface. This means that it will be advantageous that the heater is as close as possible to the user in order to achieve highest possible heat transfer to the user. In turn, this means that the shorter the distance between the heater and the user, the lower the necessary effect or output, and the lower the contact surface temperature of the heater will be. The physical size of the heater must also be limited according to what is practical for its use.

Conditions mentioned above will be fulfilled by using a heater with a heating or radiating surface temperature of approx. 150°C, which is achieved with a specific output or effect of approx. 2500 Watts/m². This radiant surface temperature is very suitable with regard to use of silicone insulated heating cable or wire as the heating element and use of thermal switches for safeguarding or securing against overheating in case of covering or misuse / erroneous use. The use of silicone insulated heating cable or wire as the heating element laminated to the radiating surface with aluminium foil and distributed over the whole / entire surface, will provide an even temperature over the whole / entire surface, while also giving the advantage of withstanding humidity or moisture.

To gain the maximum output / effect from a radiant surface it is necessary to maintain, as far as possible, the same temperature over the whole surface, so that the total heat radiance or radiation is as large as possible. This is achieved by producing heat over the whole radiant surface, and by fastening the radiating face or plate within the heater so that it has as little as possible thermal contact with other parts of the heater.

A heating surface temperature of approx. 150°C also provides a comfortable long-wave radiant heat / heat radiation and does not produce burnt dust, thus making it safe for allergy sufferers to use the heater.

Concerning the heating or radiant surface itself, it is important that all components have the same heat or thermal expansion or can freely expand in one plane, but are steered or locked in the crosswise plane, preventing the element of being distorted or deformed during heating. It is also very important that the element is fixed in the heater in such a way that heat or thermal expansion is not hindered or may cause noise, and so that as little as possible of the element's heat can be transferred to the front grid or the rear plate.

Other demands on a heater for use in the proximity zone or small spaces, besides those concerning temperature, are that it is mechanically solid and that it may be installed and used in a way that provides desired heating comfort, and that it may be used by everyone in a safe and satisfactory manner, and not least, it must be simple to produce and to be manufactured in suitable sizes and outputs.

Technical prior art is demonstrated by the patents: NO 308146 B1, NO 9781198 and NO 328736 which deal with heaters with high outputs / effects and high heating or radiant surface temperatures and which therefore employ tubular elements with hygroscopic insulation, which means that the elements must be insulated from the outside parts. These heaters are intended for transferring high heat outputs or effects and are not suited to transferring smaller outputs / effects.

EP 0 381 583 A1 concerns a heating device for heating a room by infrared radiation adapted to be fixed onto a wall or beneath a ceiling of the room. The heating device comprises a composite band including a conductive sheet having two faces, wherein a thin black layer coating is applied on one of the faces, while on the other face of the conductive sheet an insulating plastic foam layer is applied thereon.

FR 1 340 968 A relates to a method for infrared radiation heating and a heating panel implementing this method.

Document US 3961157 represents further state of the art relevant for the invention.

Measurements taken of a radiant surface heater type DV15 (1500 W), intended for warming organists, show that the temperature of the radiated target surface, at 1500 W and at a distance of 1000 mm, is the same as with 1000 W if the distance is reduced to 800 mm. This confirms that the radiant heat from a surface changes according to the square law regarding the distance, or in the same manner as light.

This led to further calculations and tests which confirmed that by reducing the distance between the heat emitting surface and the heat receiving surface, one may reduce the specific output / effect and temperature of the heating or radiating surface so much that the contact temperature of the heater's outer side is low enough to allow the heater of being positioned very close to the object to be heated, while the necessary output or effect can be greatly reduced. This has, in turn, led to the development of new radiant heating elements intended for these heaters.

For many years the inventor has worked on flat heating elements based on the use of a heating cable or wire laminated between two aluminium foils, aimed for various areas of use, such as heating pews, wall heaters to heat organists' seats in unheated churches, and encased heaters for installation on ceilings. All of these products are based on use of heating elements lying freely within the heater, in contact with the outside heating or radiating surface, and heat or thermal insulated with help of mineral wool or the like between the element and the rear side of the heater.

The disadvantage with these heaters is that they are 30-50 mm deep, and if they are to have the necessary output / effect, they will be so large as to be unsuited for use as close proximity space heaters.

Calculations and experiments / tests demonstrate that, at a specific output / effect of approx. 2500 W/m² on the heating or radiant surface, there can be provided a heater having an appropriate size. The radiant surface temperature will then be about 150°C, and thus external protection will be necessary in order to prevent the radiant surface of being touched. Experiments show that a grid with approx. 10 x 10 mm holes on about 2 mm wide / thick mesh and at a distance of approx. 10 mm from the front side of the heating or radiating surface, achieves a maximum temperature of under about 80°C. The heating surface's rear side, which emits little radiant heat, can be covered with a polished stainless steel plate at a distance of approx. 10 mm and will attain a temperature of only approx. 60°C.

One use of the invention can be as a localised space heater.

Modern heating is nowadays mostly based on keeping the room's air within a desired temperature range, and that all parts of the room shall maintain this temperature. This presupposes / implies that the requirement for warmth is the same throughout the entire room, and air circulation is the same throughout the room. The use of ceiling mounted radiant heating will cover the whole room with nearly the same radiant heat and will seemingly achieve the same warmth, but not beneath / under a desk / worktable.

Modern heating concentrates on space heating, rather than comfort heating of the individual person.

Modern dwellings and commercial premises or offices often have large expanses of glass, which, depending on solar irradiance, may lead to highly varying heating requirements. This also applies to beneath / under the worktable, corners between two windows, especially draughty areas, places with cold floors, and in rooms where only certain areas thereof are in use. A centrally controlled heating system will not be flexible enough to cater to these variations in heat requirements, so that the individual workspace may have a temperature that is substantially lower or higher than desired.

Heating based on maintaining an even air temperature presupposes also that all individuals require the same air temperature, which is not the case. This variation in heating requirements may be solved by setting the air temperature high enough to meet everyone's needs, and individuals who desire a lower temperature can either clothe themselves differently or ventilate their workspace.

Alternatively, the air temperature may be lowered, and local heat sources can be used (spot heaters) where there is a need for extra warmth. This spot heater must, primarily, meet the limited heat requirements of the individual user, and usually demands very small amounts of energy, often no more than 200-300W. Spot heating may be compared to the demand for local lighting for those individuals that require more light than the ambient or overall lighting provides.

The heat energy that the spot heater uses will be absorbed in the general heating of the premises, and will not come as an addition to it. Use of spot heating will thus make it possible to lower the average room temperature by several degrees Celsius. Considering that when the room temperature is lowered by approx. 1°C, 5% of the energy consumption may be saved, this system is of great economic value, and, at the same time, the individual user gets exactly the comfort temperature is desired.

It is known that the temperature under a worktable often can be considerably lower than in the rest of the room, and together with the need for heating of the legs more than other parts of the body (warm feet - warm all over) this means that local heating under the worktable may be very beneficial.

Experiments / tests show that by placing a radiant surface heater of approx. 300W on the floor under the table, radiating upwards, the temperature under the worktable will be increased by 5-7°C within about 20 minutes. This corresponds to the specific output / effect used for heating of pew areas in churches. Both the Norwegian and Swedish Directorates for Cultural Heritage have carried out experiments for heating in churches that show by using radiant heat directed towards the floor, with an output / effect of approx. 500 Watts/metre of bench / pew, the air or ambient room temperature can be lowered to approx. 12-13°C while maintaining the same degree of heating comfort.

Twenty years of experience from space or spot heating in churches shows that, on average, the energy consumption has been reduced by 50%.

Spot heaters can lie on the floor and radiate upwards, hang under tables and radiate downwards, or stand vertically and radiate horizontally. The effect or output is from approx. 150W to 400W.

Equally important as heating the object that requires warming, is not heating objects that do not require warming.

Lying on the floor, with the radiant surface up, and at a distance from the floor of approx. 3 cm, provides the floor with a heat contribution of approx. 6°C, something which is very important if the floor is parquet, which can only tolerate about 28°C before being damaged. Or when the heater hangs under a worktable, radiating downwards, it must not transfer unwanted heat to the desk or table top.

Using standing radiant surface heaters that directly supply heat to individual work stations in industrial premises of approx. 300 m², having a ceiling height of about 5 m, and with 3-4 work stations, it is shown that average energy consumption over several years is approx. 45 kWh/m², which is only about 25% of the energy consumption in comparable traditionally heated premises.

Panel heaters used in this way must have the specific output or effect of the radiant elements increased up to approx. 4000 W/m² and have tubular elements instead of silicone insulated heating cable or wire. In addition the radiant element must be electric and thermal or heat insulated from the outside parts.

The invention can also be used as a bed warmer standing on the floor under the bed.

The inventor has previously manufactured and sold a bed warmer of steel that lay between the base and the mattress. This was tested by Professor Sven Svebak, University of Bergen, with regard to lying on a cold bed compared to a warm one, and the conclusion was clear: With a warmed-up bed, breathing is eased and the pulse is slowed so noticeably that it is clear that a warmed bed provides better rest than a cold one.

The only present method of warming beds is by using electric blankets that lie on the mattress top and that are in direct contact with the bed's user. These blankets are associated with high risk of misuse, and are therefore not recommended for use by children, bed-wetters, or disabled and ill people, and must be used under supervision.

Electric blankets must not be used if they are worn or damaged, and must not be folded, or used in other ways that might be hazardous. The heating blanket must also be cleaned or washed regularly, and be constantly controlled for faults.

A bed-warmer standing on the floor beneath the bed, radiating heat up towards the mattress, will warm up the mattress from below very efficiently in that approx. 98% of the radiant heat is directed towards the mattress that contains a large number of metal springs and air pockets. All convection heat from the bed-warmer's upper side or surface will also rise into the mattress and help warming it. This means that just a very small proportion of the heat will go to heat the bedroom, which many prefer to remain cool.

Extensive or long-term tests / experiments using a bed-warmer that is approx. 25 cm broad and about 100 cm long, standing or lying on the floor beneath / under the bed, and with a 200W output / effect, increased the temperature of the mattress's upper side or surface (covered with a down duvet) by about 10°C after about 3-4 hours.

The correct bed temperature can be regulated either by remote control, thermostat or by a timer that switches the heater on at precisely the user desired time.

A bed-warmer according to the design of this invention may be used by all, will not wear, cannot be misused, is operationally reliable, is not in direct contact with the user, and can be used without supervision.

A design or embodiment of the invention allows it to be used as a ceiling or wall heater.

The invention presented concerns a radiant heating element comprising at least one heating element, at least one first or primary radiant side or face for the heating element, and at least one second or secondary radiant side or face for the heating element. The at least one first or primary side or face has an outer radiant surface or layer with a first or primary emission coefficient. The at least one second(ary) side or face has an outer radiant surface or layer with a second emission coefficient. The first emission coefficient is greater than the second emission coefficient, so that the difference between the first and the second emission coefficient provides directional radiation of heat.

The at least one first or primary emission coefficient may lie in the range of 0.5 to 0.95. The at least one second(ary) emission coefficient may lie in the range of 0.02 to 0.1.

According to the invention, the surface of the at least one first or primary radiant side is constituted of an anodized or enamelled aluminium or enamelled or oxidized metal.

In other embodiments not covered by the claims, the surface of the at least one first or primary radiant side is made of or manufactured from one of the following : glass; porcelain; or other surface treated metal, such as e.g. lacquered aluminium, or lacquered metal; mekanit, or a treated organic material, such as e.g. a plastic film / foil.

According to the invention, the surface of the at least one second radiant side is constituted of polished aluminium.

In other embodiments not covered by the claims, the surface of the at least one second(ary) side or face is made of or is manufactured from one of the following : other polished or untreated metal; or vaporized or chemically deposited metal on glass, porcelain, plastic or enamel.

The heating element may be a heating cable or wire insulated with heat or thermal resistant insulation.

The heating element may also be a heating cable or wire coated with silicone.

Alternatively, the heating element may be a tubular element of steel or other metal, or an extruded metal profile.

The heating element is laminated or fixed with heat resistant glue or double-sided tape, between the at least one first radiant side and the at least one second radiant side. The heating element may, according to another design or embodiment, be divided into two output or effect parts or portions, where the first part emits 1/3 of the output / effect, and the other / second part emits 2/3 of the output / effect. Furthermore, the two parts can be evenly distributed over the whole surface of the radiant heating element.

The heating element's power or effect may come from one of the following energy carriers: electricity, water, oil or another liquid or gas.

The radiant heating element may have at least one of the following forms: substantially flat, triangular, square, polygonal, circular and/or pattern impressed. Independent of the radiant heating element's form, by taking advantage of the difference in the emission coefficients, a directional radiation of heat can be attained. Of course, depending on the form of the radiant heating element, calculations and/or observations will have to be made in order to decide what the coefficient of emission for each radiant side or face of the element must be.

Furthermore, the invention concerns a panel heater which comprises at least one of the above-mentioned radiant heating elements, and that is designed to provide directional radiant heat / heat radiation.

The panel heater may also comprise an outer grid component or element, mainly over the at least one first or primary radiant side or face, and which is designed with a first predetermined distance from the radiant surface or heating element, so that the outer grid element or component is arranged mainly parallel to the heating element. The outer grille element can protect against direct contact with the radiant surface or heating element. The outer grid component may be epoxy coated. In a predetermined area of, or its whole surface, the outer grid component may comprise openings that are perpendicular to the surface of the radiant heating element. The openings, perpendicular to the surface of the radiant heating element, may be arranged to cover or constitute from 50% to 95% of this area, particularly from 60% to 85%, and more particularly from 65% to 80%. The outer grid component may comprise a plate part and a mesh part that are arranged principally over the whole, or major areas, of the radiant heating element's parallel surface.

The panel heater may further comprise a plate element or component over / covering the at least one second(ary) radiant side or face and that is arranged with a second predetermined distance from the radiant surface element, so that the plate element is arranged mainly parallel to the radiant heating element. The plate element or component can protect against contact with the radiant heating element.

In a further embodiment the first predetermined distance of the grid element can be the same as or equal to the second predetermined distance of the plate element. Alternatively, the first distance may be greater than or less than the second distance.

The radiant heating element can have no metallic contact with the grid component and/or the plate component.

Furthermore, two almost identically formed plates in the panel heater can cover the at least one first or primary radiant side or face and the at least one second(ary) radiant side or face of the radiant heating element, wherein the radiant heating element lies between these two plates and can freely expand lengthwise within the panel heater.

In an alternative embodiment or design, the invention concerns a heater that comprises at least one of the above-mentioned radiant heating elements, and that is constructed to provide directional radiant heat / heat radiation.

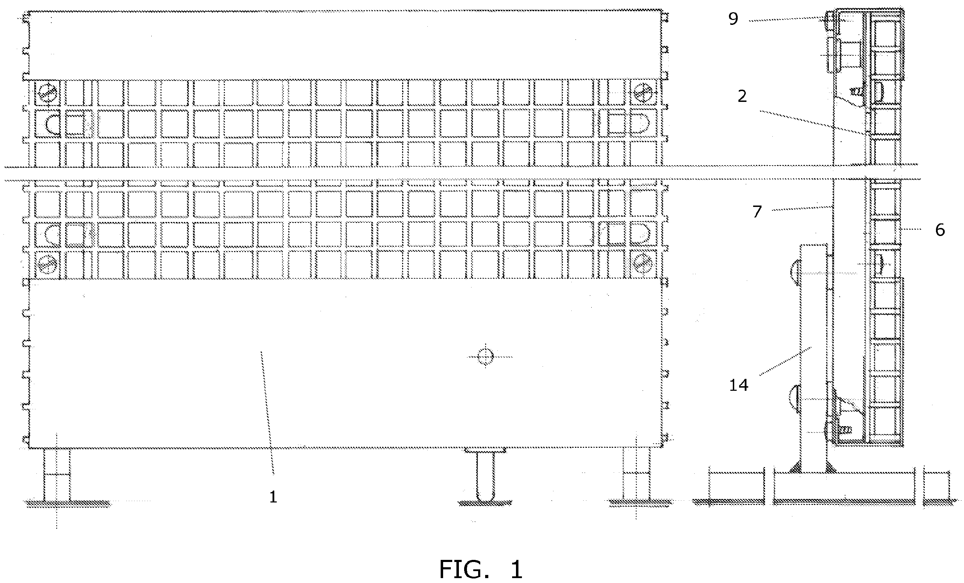

Fig. 1 shows a front view and a side view of a radiant heating element and a panel heater in accordance with an embodiment or construction of the invention.

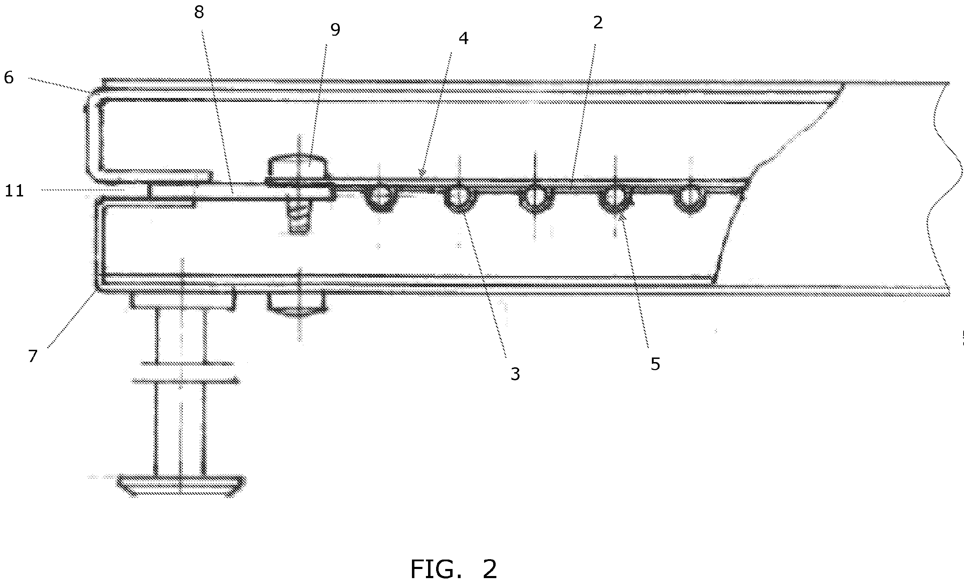

Fig. 2 shows a cross section of the radiant heating element and the panel heater in accordance with an embodiment or construction of the invention.

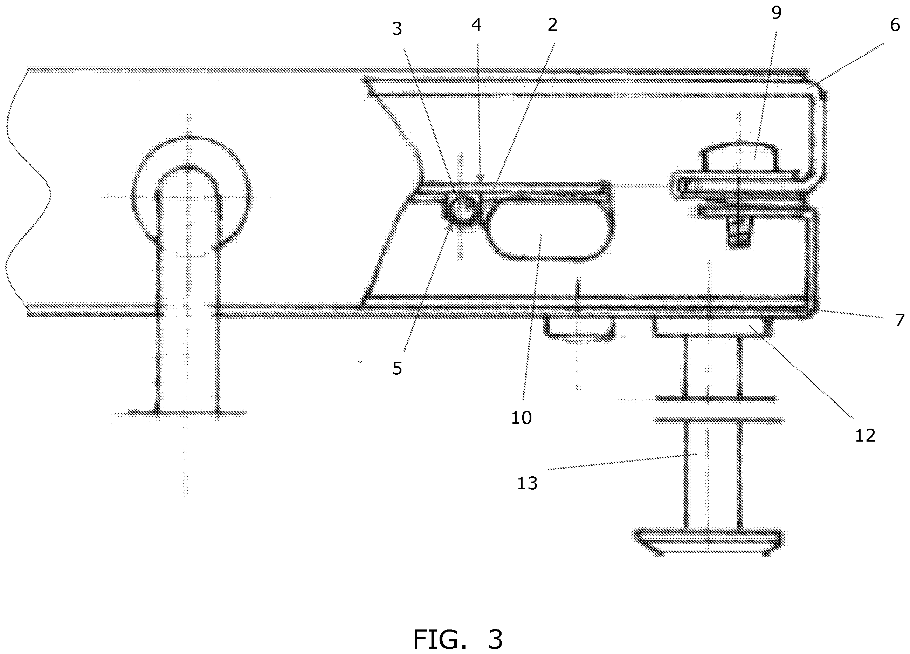

Fig. 3 shows another cross section of the radiant heating element and the panel heater in accordance with an embodiment or construction of the invention.

The following reference numerals are used:
- 1: Panel
- 2: Radiant heating element
- 3: Heating element
- 4: Radiant surface's front or first / primary side or face (first radiant side)
- 5: Radiant surface's back or second(ary) side or face (second radiant side)
- 6: Grid / grid element or component
- 7: Rear plate / plate element or component
- 8: Fixture for radiant heating element
- 9: Screw (of suitable type for each application)
- 10: Thermal cut-off / temperature or thermal protection
- 11: Interstice or gap
- 12: Nut (of suitable type for each application)
- 13: Leg
- 14: Foot

The panel, or panel heater, (1) comprises an inner radiant heating element (2) that has an outer front side or face (4) with a high emission coefficient (approx. 0.8, e.g. from 0.5 to 0.95) that emits considerable radiant heat, a heat imparting element (3) which supplies the radiant surface with an even heating effect over the whole radiant surface, and an outer rear side or face (5) with a low emission coefficient (approx. 0.05, e.g. from 0.02 to 0.1) that emits little radiant heat. The principle consists of having a radiant heating element comprising at least one heating element (3), at least one radiant side or face with a first or primary emission coefficient and at least one second radiant side or face with a second(ary) emission coefficient, where the first emission coefficient is greater than the second emission coefficient, so that the difference between the first and the second emission coefficient will create directional radiant heat / directional heat radiation.

The front side of the panel, that emits considerable radiant heat, is protected from or safeguarded against being touched by means of a grid (6), while the rear side of the panel, that emits little radiant heat, is protected by a polished metal plate (7) (stainless steel plate). The grid (6) can be epoxy coated. There will be arranged a first predetermined distance, for the most part constant, between the surfaces of the radiant element (2) and the grid (6). There will be arranged a second predetermined distance, for the most part constant, between the surfaces of the radiant element (2) and the rear plate (7). In one embodiment the first and second predetermined distance may be equal. In another embodiment or design the first predetermined distance may be greater than the second one, and vice versa in a third embodiment or design (i.e. the first predetermined distance may be smaller than the second one).

The radiant heating element (2) may be hung by insulating fastening(s) (8) between the grid (6) and the rear plate (7). There may, e.g., be arranged at least two fastenings (8) on each long side of the radiant heating element (2) that are fixed to the radiant heating element (2) by screws (9), where the other end of the fastenings lies in the interstice or gap (13) between the grid (6) and the rear plate (7).

A thermal cut-off (10) is attached to one long side of the radiant heating element (2).

The grille (6) and the rear plate (7) have approximately the same form and dimensions and are constructed so that they, in addition to covering the front and rear of the panel (1), also cover the sides. They are bent in towards the heating element (2), without having any metallic contact with the heating element (2). The grille (6) is not in contact with the rear plate (7) along the length of the panel except by means of the fastening screws (9) that hold the two parts together. The grille (6) and the rear plate (7) are, on the short side of the panel, attached to each other by means of screws (9) along each short side.

There is an interstice (11) between the grille (6) and the rear plate (7), in which lie the other ends of the fastenings (8) attached to the grille (6) and/or the rear plate (7).

The rear plate (7) has nuts (12) affixed for attaching the legs (13) when the panel (1) is to lie on the floor, or feet (14) when the panel (1) is to stand upright.

The panel heater (1) is intended for space heating and to provide additional heat that is necessary to attain the desired comfort warmth in places where the main heating system does not provide sufficient warmth, in the same way as localised lighting provides additional light where this is required.

It is equally important that the panel (1) does not heat other spaces that do not require heating, or may be damaged by inadvertent heating, e.g. parquet floors that cannot withstand more than about 28°C.

## Claims

1. A radiant heating element (2) comprising at least one heating element (3), at least one first radiant side (4) of the radiant heat element (2) and at least one second side (5) of the radiant heat element (2), where the at least one first radiant side (4) has an outer radiant surface with a first emission coefficient, and the at least one second radiant side (5) has a second emission coefficient, and where the first emission coefficient is greater than the second emission coefficient, so that the difference between the first and the second coefficient provides directional radiant heat, **characterized in that** the at least one first radiant side (4) is constituted of an anodised or enamelled aluminium or enamelled or oxidized metal, and the at least one second radiant side (5) is constituted of polished aluminium, and where the heating element (3) is laminated or fixed with heat-resistant glue or double-sided tape between the at least one first radiant side (4) and the at least one second radiant side (5).

2. The radiant heating element in accordance with claim 1, where the first emission coefficient is between 0.5 and 0.95, and the second emission coefficient is between 0.02 to 0.1.

3. The radiant heating element in accordance with claim 1 or 2, where the heating element (3) is a heating cable insulated with a heat resistant insulation.

4. The radiant heating element in accordance with any one of claims 1-3, where the heating element (3) is a heating cable coated with silicone.

5. The radiant heating element in accordance with claim 1 or 2, where the heating element (3) is a tubular element made of steel, metal or an extruded metal profile.

6. The radiant heating element in accordance with any one of claims 1-5, where the heating element (3) is divided into two power or output portions, where the first output portion is configured to emit 1/3 of the total effect or output, and the second fraction is configured to emit 2/3 of the total effect or output.

7. The radiant heating element in accordance with claim 6, where the two portions are evenly distributed over the whole surface of the radiant heating element (2).

8. The radiant heating element in accordance with any one of claims 1-7, where the heating element's (3) heating effect or output derives from one of the following energy carriers: electric current, water, oil and another liquid or gas.

9. The radiant heating element in accordance with any one of claims 1-8, where this has one of the following shapes or profiles: mainly flat, triangular, square, polygonal, circular and/or pattern impressed.

10. A neater comprising at least one radiant heating element (2) in accordance with any one of claims 1-9, and constructed to provide directional radiant heat.

11. The heater in accordance with claim 10, where the heater is a panel heater.

12. The panel heater in accordance with claim 11, where the panel heater (1) comprises an outer grid element (6) arranged at a predetermined distance from the radiant heating element (2), so that the outer grid element (6) is mainly arranged parallel to the radiant heating element (2), and the outer grid element (6) protects against contact with the radiant heating element (2).

13. The panel heater in accordance with claim 11 or 12, where the outer grid element (6) is epoxy coated.

14. The panel heater in accordance with any one of claims 11-13, where the outer grid element (6), in a specific area of or the whole of its surface, has holes that are perpendicular to the radiant surface of the radiant heating element (2), and constituting from 50% to 95% of this area.

15. The panel heater in accordance with any one of claims 11-14, where the outer grid element (6) comprises a mesh section arranged mainly over the radiant heating element (2), and a plate section.

16. The panel heater in accordance with any one of claims 11-15, where the panel heater (1) further comprises a plate element (7) arranged at a predetermined distance from the radiant heating element (2), in such a way that the plate element (7) is mainly parallel to the surface of the radiant heating element (2), and the plate element (7) protects against contact with the radiant heating element (2).

17. The panel heater in accordance with any one of claims 11-16, where the radiant heating element (2) has no metallic contact with the outer grid element (6) and the plate element (7).

18. The panel heater in accordance with claim 11, where two approximately identically formed plates cover the at least one first radiant side and the at least one second radiant side of the radiant heating element, the radiant heating element being between these two plates and can freely expand lengthwise in the panel heater.

19. The heater in accordance with claim 10, where the heater is a bed warmer standing on a floor under a bed.

## Patentansprüche

1. Strahlungsheizelement (2), das wenigstens ein Heizelement (3), wenigstens eine erste Strahlungsseite (4) des Strahlungsheizelements (2) und wenigstens eine zweite Seite (5) des Strahlungsheizelements (2) umfasst, wobei die wenigstens eine erste Strahlungsseite (4) eine äußere Strahlungsoberfläche mit einem ersten Emissionskoeffizienten aufweist und die wenigstens eine zweite Strahlungsseite (5) einen zweiten Emissionskoeffizienten aufweist und wobei der erste Emissionskoeffizient größer als der zweite Emissionskoeffizient ist, so dass die Differenz zwischen dem ersten und dem zweiten Koeffizienten eine gerichtete Strahlungswärme bereitstellt, **dadurch gekennzeichnet, dass** die wenigstens eine erste Strahlungsseite (4) aus einem anodisiertem oder emaillierten Aluminium oder einem emaillierten oder oxidierten Metall besteht und die wenigstens eine zweite Strahlungsseite (5) aus poliertem Aluminium besteht, wobei das Heizelement (3) zwischen der wenigstens einen ersten Strahlungsseite (4) und der wenigstens einen zweiten Strahlungsseite (5) mit wärmebeständigem Klebstoff oder doppelseitigem Klebeband laminiert oder fixiert ist.

2. Strahlungsheizelement nach Anspruch 1, wobei der erste Emissionskoeffizient zwischen 0,5 und 0,95 liegt und der zweite Emissionskoeffizient zwischen 0,02 und 0,1 liegt.

3. Strahlungsheizelement nach Anspruch 1 oder 2, wobei das Heizelement (3) ein Heizkabel ist, das mit einer wärmebeständigen Isolierung isoliert ist.

4. Strahlungsheizelement nach einem der Ansprüche 1-3, wobei das Heizelement (3) ein Heizkabel ist, das mit Silikon beschichtet ist.

5. Strahlungsheizelement nach Anspruch 1 oder 2, wobei das Heizelement (3) ein Rohrelement ist, das aus Stahl, Metall oder einem extrudierten Metallprofil gefertigt ist.

6. Strahlungsheizelement nach einem der Ansprüche 1-5, wobei das Heizelement (3) in zwei Leistungs- oder Nutzleistungsabschnitte unterteilt ist, wobei der erste Nutzleistungsabschnitt konfiguriert ist, um 1/3 der Gesamtwirkung oder -nutzleistung zu emittieren, und der zweite Anteil konfiguriert ist, um 2/3 der Gesamtwirkung oder -nutzleistung zu emittieren.

7. Strahlungsheizelement nach Anspruch 6, wobei die zwei Abschnitte gleichmäßig über die gesamte Oberfläche des Strahlungsheizelements (2) verteilt sind.

8. Strahlungsheizelement nach einem der Ansprüche 1-7, wobei die Heizwirkung oder - nutzleistung des Heizelements (3) aus einem der folgenden Energieträger gewonnen wird:
elektrischem Strom, Wasser, Öl und einer anderen Flüssigkeit oder einem anderen Gas.

9. Strahlungsheizelement nach einem der Ansprüche 1-8, wobei dieses eine der folgenden Formen oder Profile aufweist:
hauptsächlich flach, dreieckig, quadratisch, polygonal, kreisförmig und/oder mit aufgeprägtem Muster.

10. Heizung, die wenigstens ein Strahlungsheizelement (2) nach einem der Ansprüche 1-9 umfasst und konstruiert ist, um eine gerichtete Strahlungswärme bereitzustellen.

11. Heizung nach Anspruch 10, wobei die Heizung eine Plattenheizung ist.

12. Plattenheizung nach Anspruch 11, wobei die Plattenheizung (1) ein äußeres Gitterelement (6) umfasst, das in einem zuvor bestimmten Abstand von dem Strahlungsheizelement (2) angeordnet ist, so dass das äußere Gitterelement (6) hauptsächlich parallel zu dem Strahlungsheizelement (2) angeordnet ist und das äußere Gitterelement (6) vor einer Berührung mit dem Strahlungsheizelement (2) schützt.

13. Plattenheizung nach Anspruch 11 oder 12, wobei das äußere Gitterelement (6) epoxidbeschichtet ist.

14. Plattenheizung nach einem der Ansprüche 11-13, wobei das äußere Gitterelement (6) auf seiner gesamten Oberfläche oder in einer spezifizierten Region davon Löcher aufweist, die senkrecht zu der Strahlungsoberfläche des Strahlungsheizelements (2) liegen und 50 % bis 95 % dieser Region ausmachen.

15. Plattenheizung nach einem der Ansprüche 11-14, wobei das äußere Gitterelement (6) einen Netzbereich, der hauptsächlich über dem Strahlungsheizelement (2) angeordnet ist, und einen Plattenbereich umfasst.

16. Plattenheizung nach einem der Ansprüche 11-15, wobei die Plattenheizung (1) ferner ein Plattenelement (7) umfasst, das in einem zuvor bestimmten Abstand von dem Strahlungsheizelement (2) derart angeordnet ist, dass das Plattenelement (7) hauptsächlich parallel zu der Oberfläche des Strahlungsheizelements (2) liegt, und das Plattenelement (7) vor der Berührung mit dem Strahlungsheizelement (2) schützt.

17. Plattenheizung nach einem der Ansprüche 11-16, wobei das Strahlungsheizelement (2) keine metallische Berührung mit dem äußeren Gitterelement (6) und dem Plattenelement (7) aufweist.

18. Plattenheizung nach Anspruch 11, wobei zwei annähernd identisch ausgeformte Platten die wenigstens eine erste Strahlungsseite und die wenigstens eine zweite Strahlungsseite des Strahlungsheizelements bedecken, wobei das Strahlungsheizelement zwischen diesen zwei Platten liegt und sich der Länge nach in der Plattenheizung frei erstrecken kann.

19. Heizung nach Anspruch 10, wobei die Heizung ein Bettwärmer ist, der auf einem Boden unter einem Bett steht.

## Revendications

1. Élément chauffant rayonnant (2) comprenant au moins un élément chauffant (3), au moins un premier côté (4) rayonnant de l'élément chauffant rayonnant (2) et au moins un second côté (5) de l'élément chauffant rayonnant (2), l'au moins un premier côté (4) rayonnant présentant une surface rayonnante externe à premier coefficient d'émission et l'au moins un second côté (5) rayonnant présentant un second coefficient d'émission tandis que le premier coefficient d'émission est supérieur au second coefficient d'émission, si bien que la différence entre le premier et le second coefficients fournit une chaleur rayonnante directionnelle, **caractérisé en ce que** l'au moins un premier côté (4) rayonnant est constituée d'un aluminium anodisé ou émaillé ou d'un métal émaillé ou oxydé et **en ce que** l'au moins un second côté (5) rayonnant est constitué d'aluminium poli, tandis que l'élément chauffant (3) est laminé ou fixé avec de la colle thermorésistante ou avec du ruban double face entre l'au moins un premier côté (4) rayonnant et l'au moins un second côté (5) rayonnant.

2. Élément chauffant rayonnant selon la revendication 1, dans lequel le premier coefficient d'émission est compris entre 0,5 et 0,95 et où le second coefficient d'émission est compris entre 0,02 et 0,1.

3. Élément chauffant rayonnant selon la revendication 1 ou 2, dans lequel l'élément chauffant (3) est un câble chauffant isolé au moyen d'une isolation thermorésistante.

4. Élément chauffant rayonnant selon l'une quelconque des revendications 1 à 3, dans lequel l'élément chauffant (3) est un câble chauffant revêtu de silicone.

5. Élément chauffant rayonnant selon la revendication 1 ou 2, dans lequel l'élément chauffant (3) est un élément tubulaire fait d'acier, de métal ou d'un profilé métallique extrudé.

6. Élément chauffant rayonnant selon l'une quelconque des revendications 1 à 5, dans lequel l'élément chauffant (3) est divisé en deux parties de puissance ou de rendement, la première partie de rendement étant conçue pour émettre 1/3 de l'effet total ou du rendement et la seconde fraction étant conçue pour émettre 2/3 de l'effet total ou du rendement.

7. Élément chauffant rayonnant selon la revendication 6, dans lequel les deux parties sont uniformément réparties sur toute la surface de l'élément chauffant rayonnant (2).

8. Élément chauffant rayonnant selon l'une quelconque des revendications 1 à 7, dans lequel l'effet ou le rendement de chauffage de l'élément chauffant (3) dérive de l'un des vecteurs suivants d'énergie :
du courant électrique, de l'eau, de l'huile et un autre liquide ou gaz.

9. Élément chauffant rayonnant selon l'une quelconque des revendications 1 à 8, présentant l'une des formes ou profils suivants :
principalement plat, triangulaire, carré, polygonal, circulaire et/ou à motif imprimé.

10. Appareil de chauffage comprenant au moins un élément chauffant rayonnant (2) selon l'une quelconque des revendications 1 à 9, et construit pour fournir une chaleur rayonnante directionnelle.

11. Appareil de chauffage selon la revendication 10, dans lequel l'appareil de chauffage est un panneau de chauffage.

12. Panneau de chauffage selon la revendication 11, dans lequel le panneau de chauffage (1) comprend un élément de grille externe (6) agencé à une distance prédéfinie de l'élément chauffant rayonnant (2), afin que l'élément de grille externe (6) soit principalement agencé parallèle à l'élément chauffant rayonnant (2) et que l'élément de grille extérieur (6) protège contre le contact avec l'élément chauffant rayonnant (2).

13. Panneau de chauffage selon la revendication 11 ou 12, dans lequel l'élément de grille externe (6) est revêtu d'époxy.

14. Panneau de chauffage selon l'une quelconque des revendications 11 à 13, dans lequel l'élément de grille externe (6), dans une zone spécifique de sa surface ou sur la totalité de cette dernière, comporte des trous perpendiculaires à la surface rayonnante de l'élément chauffant rayonnant (2) et constituant de 50 % à 95 % de cette zone.

15. Panneau de chauffage selon l'une quelconque des revendications 11 à 14, dans lequel l'élément de grille externe (6) comprend une section de maille, agencée principalement sur l'élément chauffant rayonnant (2), et une section de plaque.

16. Panneau de chauffage selon l'une quelconque des revendications 11 à 15, dans lequel le panneau de chauffage (1) comprend en outre un élément de plaque (7) agencé à une distance prédéfinie de l'élément chauffant rayonnant (2), de telle manière que l'élément de plaque (7) soit principalement parallèle à la surface de l'élément chauffant rayonnant (2) et que l'élément de plaque (7) protège contre le contact avec l'élément chauffant rayonnant (2).

17. Panneau de chauffage selon l'une quelconque des revendications 11 à 16, dans lequel l'élément chauffant rayonnant (2) n'a aucun contact métallique avec l'élément de grille externe (6) et avec l'élément de plaque (7).

18. Panneau de chauffage selon la revendication 11, dans lequel deux plaques de forme approximativement identique recouvrent l'au moins un premier côté rayonnant et l'au moins un second côté rayonnant de l'élément chauffant rayonnant, l'élément chauffant rayonnant étant entre ces deux plaques et pouvant se dilater librement dans le sens de la longueur dans le panneau de chauffage.

19. Appareil de chauffage selon la revendication 10, dans lequel l'appareil de chauffage est un chauffe-lit posé sur un plancher sous un lit.
